# EUROPÄISCHE PATENTANMELDUNG

(11) **EP 1 575 213 A1**
(43) Veröffentlichungstag der Anmeldung: **14.09.2005**
(21) Anmeldenummer: 04005428.0
(22) Anmeldetag: 08.03.2004
(51) Int. Cl.: H04L 12/24, H04Q 7/34

(54) **Verfahren und Vorrichtung zum Betrieb von mindestens zwei Baugruppenträgern**

(71) Anmelder: SIEMENS AKTIENGESELLSCHAFT, 80333 München (DE)
(72) Erfinder: Schwab, Dieter, 86916 Kaufering (DE)

(57) **Zusammenfassung**

Bei einem Verfahren zum Betrieb von mindestens zwei Baugruppenträgern (BT1, BT2), die räumlich benachbart angeordnet und jeweils über ein Netzwerk (NW) an eine Steuereinheit (SM) angeschlossen sind, überträgt eine den mindestens zwei Baugruppenträgern (BT1, BT2) gemeinsam zugeordnete Vorrichtung (RM) Alarminformationen (AI) über das Netzwerk (NW) an die Steuereinheit (SM).

## Beschreibung

Die Erfindung betrifft ein Verfahren zum Betrieb von mindestens zwei Baugruppenträgern, die räumlich benachbart angeordnet und jeweils über ein Netzwerk an eine Steuereinheit angeschlossen sind, sowie eine entsprechende Vorrichtung.

Zum Betrieb von Funkkommunikationssystemen werden neben einer Vielzahl weiterer Einrichtungen beispielsweise Basisstationen benötigt, die so ausgebildet sind, dass sie eine Funkverbindung mit einer Teilnehmerstation aufbauen und unterhalten können. Zum Ansteuern einer Antennenvorrichtung der Basisstation sowie zum Austausch von Informationen mit einem an die Basisstation über weitere Einrichtungen angeschlossenen Festnetz sind eine Vielzahl von Steuer-, Mess- und Signalverarbeitungseinrichtungen nötig, die u.a. durch auf Baugruppen angebrachte Schaltungen und eine komplexe Computersteuerung realisiert werden. Eine Basisstation besteht daher zumeist aus mindestens einem Schrank (engl.: rack), in den mehrere Baugruppenträger (engl.: shelfs) eingebaut sind, wobei jeder Baugruppenträger über eine Mehrzahl von Baugruppen (engl.: boards) verfügt. Allgemein können Baugruppenträger zum Aufbau leistungsfähiger so genannter Eingebetteter-Rechner-Systeme (embedded computer systems), beispielsweise Industrie-Computer oder Vermittlungsrechner für Telekommunikationssysteme, verwendet werden. Baugruppenträger werden beispielsweise gemäß der ATCA (Advanced Telecom Computing Architecture) des PICMG 3.0 Standards (PICMG: PCI Industrial Computer Manufacturers Group, PCI: Programmable Communication Interface) betrieben.

Zur Ansteuerung der Baugruppen eines Baugruppenträgers und zur Verwaltung von Fehlfunktionen der Baugruppen oder einzelner auf den Baugruppen angebrachter Komponenten verfügt jeder Baugruppenträger über einen Baugruppenmanager, der über ein Netzwerk mit einem Systemmanagement verbunden ist. Jeder der Baugruppenmanager verfügt über wenigstens eine Möglichkeit zum Anschluss von externen Signalen oder Alarmmeldungen. Beispielsweise kann einem Baugruppenmanager ein Signal zugeführt werden, dem die Umgebungstemperatur des Baugruppenträgers bzw. des Schrankes, in dem sich der Baugruppenträger befindet, entnehmbar ist. Die Anzahl der Anschlüsse eines Baugruppenmanagers für Signale oder Alarmmeldungen ist begrenzt, so dass bei einer zu geringen Anzahl vorhandener Anschlüsse beispielsweise ein Steckplatz, der üblicherweise für eine Baugruppe verwendet wird, zum Einstecken eines Moduls verwendet werden muss, das weitere Signale oder Alarmmeldungen an den Baugruppenmanager melden kann. Alternativ dazu kann der Baugruppenmanager bei einem erhöhten Bedarf für Anschlüsse für externe Signale oder Alarmmeldungen angepasst werden, d.h. insbesondere durch einen Baugruppenmanager mit einer höheren Anzahl an Anschlüssen ausgetauscht werden.

Der Nachteil bei einer derartigen Zuführung von externen Signalen oder Alarmmeldungen zu Baugruppenmanagern von Baugruppenträgern liegt darin, dass je nach Rahmenbedingungen, unter denen ein Baugruppenträger betrieben werden soll, d.h. je nach Anzahl zu verarbeitender externer Signale oder Alarmmeldungen, gegebenenfalls eine Anpassung des Baugruppenträgers bzw. des Baugruppenmanagers des Baugruppenträgers erfolgen muss, um die benötigte Anzahl an Anschlüssen für externe Signale oder Alarmmeldungen bereitstellen zu können.

Der Erfindung liegt daher die Aufgabe zugrunde, ein verbessertes Verfahren zum Betrieb von Baugruppenträgern sowie eine entsprechende Vorrichtung anzugeben, durch welche vermieden werden kann, Baugruppenträger je nach Anzahl zu verarbeitender externer Signale oder Alarmmeldungen baulich oder auf Softwarebasis verändern zu müssen.

Diese Aufgabe wird mit dem Verfahren sowie der Vorrichtung gemäß den unabhängigen Ansprüchen gelöst.

Vorteilhafte Weiterbildungen der Erfindung sind Gegenstand der abhängigen Ansprüche.

Bei dem erfindungsgemäßen Verfahren zum Betrieb von mindestens zwei Baugruppenträgern, die räumlich benachbart angeordnet und jeweils über ein Netzwerk an eine Steuereinheit angeschlossen sind, überträgt eine den mindestens zwei Baugruppenträgern (gemeinschaftlich) zugeordnete Vorrichtung Alarminformationen über das Netzwerk an die Steuereinheit.

Die Erfindung ermöglicht, dass Alarminformationen, die die wenigstens zwei Baugruppenträger im Wesentlichen in gleicher Weise betreffen oder sogar identischen Inhalt haben, von der Vorrichtung zentral an die Steuereinheit übertragen werden. Insofern ist die Vorrichtung den wenigstens zwei Baugruppenträgern gemeinschaftlich zugeordnet. Es kann auf diese Weise vermieden werden, dass identische Alarminformationen von jedem Baugruppenträger einzeln an die Steuereinheit übertragen werden. Werden für den Betrieb von wenigstens zwei Baugruppenträger gleiche Signale benötigt, anhand derer Alarminformationen erzeugt werden können, so ermöglicht die Erfindung, diese Signale über eine einzige Verbindungen an die Vorrichtung anzuschließen. Gemäß dem Stand der Technik müssen derartige Signale an jeden Baugruppenträger einzeln mit einer entsprechenden Verbindung angeschlossen werden. Gegenüber dem Stand der Technik können durch die Erfindung Verbindungen eingespart werden. Alle Signale, die zum Erzeugen von Alarminformationen dienen, können an die Vorrichtung angeschlossen werden. Die Alarminformationen können von der Vorrichtung selbstverständlich auch anhand von Signalen von einem der wenigstens zwei Baugruppenträger erzeugt werden. Diese Signale geben Fehlfunktionen des Baugruppenträgers an und werden von dem Baugruppenträger über das Netzwerk an die Vorrichtung übertragen. Die Vorrichtung kann somit als zentrale Einrichtung zur Verwaltung von Fehlfunktionen der Baugruppenträger verwendet werden.

Die Vorrichtung kann insbesondere in einen Schrank eingebaut sein, in dem mehrere Baugruppenträger angeordnet sind. Ebenfalls von Vorteil ist die Anordnung der Vorrichtung innerhalb eines Raumes, in dem die Baugruppenträger oder ein Schrank mit den Baugruppenträgern aufgestellt werden.

Es ist von Vorteil, dass in der Vorrichtung Informationen über die Konfiguration der wenigstens zwei Baugruppenträger gespeichert und/oder verwaltet werden. Derartige Konfigurationsinformationen betreffen beispielsweise eine Vernetzung der wenigstens zwei Baugruppenträger oder deren Adressen in dem Netzwerk. Auf diese Weise kann die Steuereinheit von der Vorrichtung jederzeit über eine aktuelle Konfiguration bzw. Vernetzung von Baugruppenträgern informiert werden bzw. durch einen entsprechenden Befehl mittels der Vorrichtung die aktuelle Konfiguration neu einstellen.

In einer alternativen Ausgestaltung der Erfindung berücksichtigen die Alarminformationen weder ein Signal eines der Baugruppenträger noch ein Signal einer in wenigstens einen der wenigstens zwei Baugruppenträger eingebauten Baugruppe. Jeder Baugruppenträger kann eigene Fehlfunktionen selbst verwalten und selbst entsprechende Alarminformationen erzeugen. Die von der Vorrichtung übertragenen Alarminformationen werden gemäß dieser Ausgestaltung der Erfindung unter Berücksichtigung externer Signale generiert. Die Alarminformationen der Vorrichtung werden beispielsweise anhand eines Signals erzeugt, das die Temperatur der Umgebung angibt, in der sich die Baugruppenträger befinden. Eine Alarminformation kann somit beispielsweise die Steuereinheit darüber informieren, dass ein Temperaturgrenzwert über- oder unterschritten wurde. Stellvertretend für eine Vielzahl externer Signale sei auch ein Signal genannt, das das Öffnen einer Tür eines Schrankes anzeigt, in den die Baugruppenträger eingebaut sind.

Vorteilhafterweise überträgt jeder Baugruppenträger seine jeweiligen Alarminformationen selbst über das Netzwerk an die Steuereinheit. Für externe Störungen ist hingegen die Vorrichtung als eine zentrale Einheit verantwortlich und erzeugt Alarminformationen, die alle Baugruppenträger betreffen. Die Erfindung lässt sich somit ohne weiteres auch mit Baugruppenträgern gemäß dem Stand der Technik durchführen, die bereits so ausgelegt sind, dass sie die Steuereinheit selbst über ihre Fehlfunktionen informieren. Bauliche Veränderungen an bestehenden Baugruppenträgern sind für eine Anwendung der Erfindung nicht erforderlich.

Es ist besonders günstig, wenn das Netzwerk ein Internetprotokoll zum Datentransport verwendet. Auf diese Weise können die Baugruppenträger über eine an einem Aufstellort vorhandene Internetverbindung in einfacher Weise sowohl an die erfindungsgemäße Vorrichtung, als auch an die Steuereinheit angeschlossen werden.

Um den Baugruppenträgern zu ermöglichen, auf eine Alarminformation selbst unmittelbar reagieren zu können, ist es von Vorteil, wenn die Vorrichtung zumindest eine der Alarminformationen über das Netzwerk an wenigstens einen der wenigstens zwei Baugruppenträger überträgt.

Vorteilhafterweise überträgt die Vorrichtung die Alarminformationen unter Verwendung eines Internetprotokolls.

Es liegt im Rahmen der Erfindung, dass eine Redundanzeinheit alle Funktionalitäten der Vorrichtung übernimmt, falls die Vorrichtung nicht funktionsfähig ist. Auf diese Weise wird die Wahrscheinlichkeit reduziert, dass für den Betrieb der Baugruppenträger wichtige Alarminformationen auf Grund einer Fehlfunktion der Vorrichtung nicht zur Verfügung stehen.

Eine Weiterbildung der Erfindung sieht vor, dass die Vorrichtung wenigstens einen Kontakt und/oder wenigstens eine Anzeigevorrichtung unter Berücksichtigung eines von der Steuereinheit empfangenen Steuersignals steuert. Beispielsweise kann im Fall eines Feuers in einem der Baugruppenträger oder in dem Raum, in dem die Baugruppenträger aufgestellt sind, eine Alarmsirene und/oder eine akustische Alarmvorrichtung von der Vorrichtung gesteuert werden.

Die erfindungsgemäße Vorrichtung weist alle Merkmale auf, die zur Durchführung des erfindungsgemäßen Verfahrens erforderlich sind. Insbesondere können entsprechende Mittel zur Durchführung der einzelnen Verfahrensschritte oder Verfahrensvarianten vorgesehen sein.

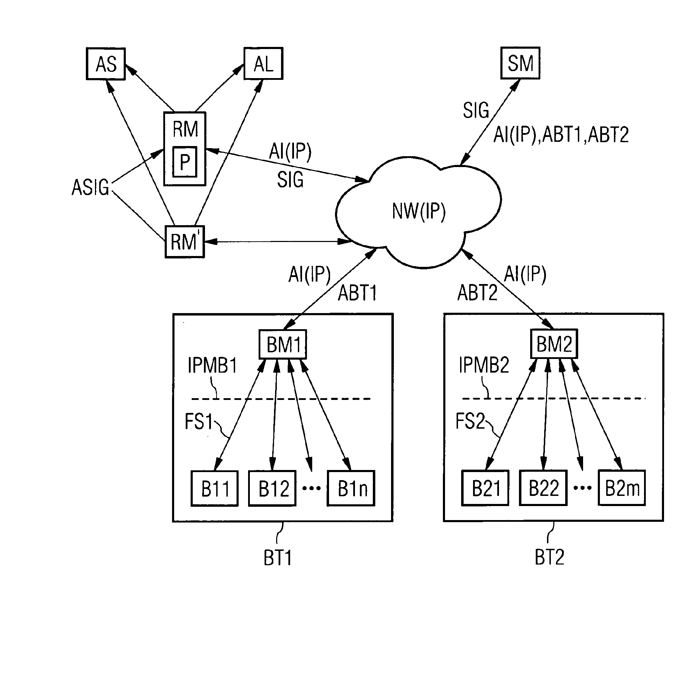

Die Erfindung wird im Folgenden anhand eines in der Figur dargestellten Ausführungsbeispiels näher erläutert.

Die Figur zeigt schematisch einen ersten Baugruppenträger BT1 und einen zweiten Baugruppenträger BT2. Der erste Baugruppenträger BT1 verfügt über einen ersten Baugruppenmanager BM1, der über eine erste Schnittstelle IPMB1 mit N Baugruppen B11, B12, ..., B1n verbunden ist. Bei der ersten Schnittstelle IPMB1 handelt es sich beispielsweise um den so genannten Intelligent Platform Management Bus, einen Zweidrahtbus (I²c-Bus), der von dem Standardisierungsgremium PICMG standardisiert wurde. Der zweite Baugruppenträger BT1 verfügt über einen zweiten Baugruppenmanager BM2, der über eine zweite Schnittstelle IPMB2 mit M Baugruppen B21, B22, ..., B2m. Die zweite Schnittstelle IPMB2 wird vorzugsweise gemäß dem gleichen Übertragungsstandard betrieben wie die erste Schnittstelle IPMB1 des ersten Baugruppenträgers BT1.

Die beiden Baugruppenträger BT1, BT2 sind jeweils über ihren Baugruppenmanager BM1, BM2 an ein Netzwerk NW angeschlossen, in dem Daten mittels eines Internetprotokolls IP transportiert werden. Das Verwenden eines Internetprotokolls ist in der Figur jeweils durch das in Klammern gesetzte Bezugszeichen "IP" dargestellt. Zum Steuern der Baugruppenträger BT1, BT2 ist an das Netzwerk NW eine Steuereinheit SM ebenfalls mittels des Internetprotokolls IP angeschlossen. Weiterhin sind an das Netzwerk NW eine Vorrichtung RM, im Folgenden als Alarmvorrichtung RM bezeichnet, und eine Redundanzeinheit RM' ebenfalls mittels des Internetprotokolls IP angeschlossen. Die Alarmvorrichtung RM wird von einem Prozessor P gesteuert. Die Redundanzeinheit RM', die von einem nicht dargestellten Prozessor gesteuert wird, übernimmt Funktionalitäten der Alarmvorrichtung RM, falls diese ausfällt oder nur teilweise funktionsfähig ist. An die Alarmvorrichtung RM und an die Redundanzeinheit RM' sind eine Alarmsirene AS und ein optischer Alarmanzeiger AL, beispielsweise ein Blinklicht, angeschlossen.

Die beiden Baugruppenträger BT1, BT2 sind beispielsweise in einen nicht dargestellten Schrank (rack) eingebaut, in dem zusätzliche Baugruppenträger angeordnet sein können. Der erste und der zweite Baugruppenmanager BM1, BM2 erhalten jeweils wenigstens ein Fehlersignal FS1, FS2 einer von ihnen gesteuerten Baugruppe B11, B21. Das Fehlersignal gibt beispielsweise eine Störung im Betrieb des jeweiligen Baugruppenträgers BT1, BT2 oder der jeweiligen Baugruppe B11, B21 an. Aufgrund des jeweiligen Fehlersignals FS1, FS2 leiten die Baugruppenträger BT1, BT2 jeweils eine entsprechende Alarminformation ABT1, ABT2 über das Netzwerk NW an die Steuereinheit SM weiter. Selbstverständlich können die Baugruppenträger ihre Alarminformationen ABT1, ABT2 oder die entsprechenden Fehlersignale auch an die Alarmvorrichtung weiterleiten. Eine Verarbeitung der Alarminformationen der Baugruppenträger BT1, BT2 oder der entsprechenden Fehlersignale kann dann alternativ oder zusätzlich in der Alarmvorrichtung RM erfolgen. Der Teil der Alarminformationen der Baugruppenträger, der nicht zwingend in der Steuereinheit bearbeitet werden muss, kann beispielsweise ausschließlich an die Alarmvorrichtung RM übertragen und von der Alarmvorrichtung RM bearbeitet werden.

Über entsprechende Leitungen werden externe Signale ASIG an die Alarmvorrichtung RM und die redundante Alarmvorrichtung RM- angeschlossen. Die externen Signale ASIG geben beispielsweise Fehlfunktionen direkt an und werden von den Alarmvorrichtungen RM, RM' mittels des Prozessors P entweder in Alarminformationen umgewandelt oder direkt als Alarminformation weitergeleitet. Weiterhin können die externen Signale ASIG beispielsweise Messwerte sein anhand derer die Alarmvorrichtungen RM, RM' Fehlfunktionen erkennen und entsprechende Alarminformationen erzeugen können. Derartige externe Signale ASIG werden nachfolgend als Alarmsignale ASIG bezeichnet.

Den externen Alarmsignalen ASIG ist keine Information über die Funktionsfähigkeit der Baugruppenträger BT1, BT2 oder der jeweiligen Baugruppen B11, B12, ..., B1n, B21, B22, ..., B2m entnehmbar. Die externen Alarmsignale ASIG betreffen beispielsweise Fehlfunktionen, die außerhalb der Baugruppenträger BT1, BT2 auftreten. Eines der externen Alarmsignale ASIG ist beispielsweise ein Alarmsignal, dem die Temperatur der Umgebung entnehmbar ist, in der sich der Schrank mit den Baugruppenträgern BT1, BT2 befindet. Einem anderen der externen Alarmsignale ASIG ist entnehmbar, dass die Tür des Schrankes geöffnet wurde. Anhand der externen Alarmsignale ASIG generiert die Alarmvorrichtung RM oder alternativ die Redundanzeinheit RM' entsprechende Alarminformationen AI, die die aktuellen Alarmsignale berücksichtigen. Die Alarminformationen AI wird mittels des Internetprotokolls IP über das Netzwerk NW an die Steuereinheit SM übertragen. Zusätzlich werden die Alarminformationen AI auch an die Baugruppenmanager BM1, BM2 der Baugruppenträger BT1, BT2 übertragen. Auf diese Weise können die Baugruppenmanager BM1, BM2 einerseits direkt auf den Teil der Alarminformation AI reagieren, für den keine weiteren Befehle von der Steuereinheit SM erforderlich sind, während andererseits die Steuereinheit SM über alle vorliegenden Alarminformationen AI informiert ist und ggf. entsprechende Steuersignale an die Baugruppenträger BT1, BT2 oder die Alarmvorrichtung RM senden kann. Selbstverständlich kann die Alarmvorrichtung RM anstelle der vollständigen Alarminformationen AI nur denjenigen Teil der Alarminformationen AI an einen Baugruppenträger BT1, BT2 übertragen, der für den Betrieb des entsprechenden Baugruppenträgers BT1, BT2 von diesem benötigt wird und ohne die Steuereinheit SM bearbeitet werden kann.

Eine Bearbeitung der Alarminformationen AI ergibt in der Steuereinheit SM, dass ein akustisches und optisches Signal den entsprechenden Alarm anzeigen muss. Die akustische und optische Anzeige des Alarms geschieht insbesondere zusätzlich zu nicht dargestellten Steuersignalen, die die Steuereinheit SM für den weiteren Betrieb der Baugruppenträger BT1, BT2 an diese überträgt. Die Steuereinheit sendet zur Steuerung der akustischen und optischen Alarmanzeige ein Steuersignal SIG über das Netzwerk NW an die Alarmvorrichtung RM. Die Alarmvorrichtung RM löst daraufhin die Alarmsirene AS und den optischen Signalgeber AL aus.

Die Alarmvorrichtung RM bzw. die redundante Alarmvorrichtung RM' verfügen auch über alle Informationen, die die Konfiguration der einzelnen Baugruppenträger BT1, BT2, d.h. insbesondere deren Bestückung mit Baugruppen betrifft, sowie Informationen über die Vernetzung der wenigstens zwei Baugruppenträger BT1, BT2. Diese Konfigurationsinformationen können von der Steuereinheit SM sowohl abgefragt, als auch eingestellt, d.h. administriert werden.

Bei dem Internetprotokoll IP handelt es sich beispielsweise um ein Internetprotokoll der Version 4, 6 oder einer nachfolgenden Version (IPv4: Internet Protocol Version 4, IPv6: Internet Protocol Version 6).

Insbesondere kann das Netzwerk mit Internetprotokollen betrieben werden, die in der ATCA gemäß dem PICMG 3.0 Standard oder auch in zukünftigen Standards, beispielsweise PICMG-Standards, definiert sind.

Selbstverständlich kann für Datenübertragungen mit von und in dem Netzwerk NW anstatt eines Internetprotokolls auch ein anderes Übertragungsprotokoll (z.B. gemäß einem ATM-Standard (ATM: Asynchronous Transfer Mode)) verwendet werden.

## Patentansprüche

1. Verfahren zum Betrieb von mindestens zwei Baugruppenträgern (BT1, BT2), die räumlich benachbart angeordnet und jeweils über ein Netzwerk (NW) an eine Steuereinheit (SM) angeschlossen sind,
**dadurch gekennzeichnet,**
**dass** eine den mindestens zwei Baugruppenträgern (BT1, BT2) zugeordnete Vorrichtung (RM) Alarminformationen (AI) über das Netzwerk (NW) an die Steuereinheit (SM) überträgt.

2. Verfahren nach Anspruch 1,
**dadurch gekennzeichnet,**
**dass** in der Vorrichtung (RM) Informationen über die Konfiguration der wenigstens zwei Baugruppenträger (BT1, BT2) gespeichert und/oder verwaltet werden.

3. Verfahren nach Anspruch 1 oder 2,
**dadurch gekennzeichnet,**
**dass** die Alarminformationen (AI) weder ein Signal eines der Baugruppenträger (BT1, BT2) noch ein Signal einer in wenigstens einen der wenigstens zwei Baugruppenträger(BT1, BT2) eingebauten Baugruppe (B11, B12, ..., B1n, B21, B22, ..., B2m) berücksichtigen.

4. Verfahren nach Anspruch 1 oder 3,
**dadurch gekennzeichnet,**
**dass** jeder Baugruppenträger (BT1, BT2) seine jeweiligen Alarminformationen (ABT1, ABT2) selbst über das Netzwerk (NW) an die Steuereinheit (SM) überträgt.

5. Verfahren nach einem der Ansprüche 1 bis 4,
**dadurch gekennzeichnet,**
**dass** das Netzwerk (NW) ein Internetprotokoll (IP) zum Datentransport verwendet.

6. Verfahren nach einem der Ansprüche 1 bis 5,
**dadurch gekennzeichnet,**
**dass** die Vorrichtung (RM) zumindest eine der Alarminformationen (AI) über das Netzwerk (NW) an wenigstens einen der wenigstens zwei Baugruppenträger (BT1, BT2) überträgt.

7. Verfahren nach einem der Ansprüche 1 bis 6,
**dadurch gekennzeichnet,**
**dass** die Vorrichtung (RM) die Alarminformationen (AI) unter Verwendung eines Internetprotokolls (IP) überträgt.

8. Verfahren nach einem der Ansprüche 1 bis 7,
**dadurch gekennzeichnet,**
**dass** eine Redundanzeinheit (RM') alle Funktionalitäten der Vorrichtung (RM) übernimmt, falls die Vorrichtung (RM) nicht funktionsfähig ist.

9. Verfahren nach einem der Ansprüche 1 bis 8,
**dadurch gekennzeichnet,**
**dass** die Vorrichtung (RM) wenigstens einen Kontakt (AS) und/oder wenigstens eine Anzeigevorrichtung (AL) unter Berücksichtigung eines von der Steuereinheit (SM) empfangenen Steuersignals (SIG) steuert.

10. Vorrichtung (RM), die mindestens zwei Baugruppenträgern (BT1, BT2) zugeordnet ist, wobei die mindestens zwei Baugruppenträger (BT1, BT2) räumlich benachbart angeordnet und jeweils über ein Netzwerk (NW) an eine Steuereinheit (SM) angeschlossen sind,
**dadurch gekennzeichnet,**
**dass** die Vorrichtung (RM) Mittel (P) aufweist, um Alarminformationen (AI) über das Netzwerk (NW) an die Steuereinheit (SM) zu übertragen.
